# EUROPEAN PATENT APPLICATION

(11) **EP 2 264 039 A1**
(43) Date of publication of application: **22.12.2010**
(21) Application number: 10158731.9
(22) Date of filing: 31.03.2010
(51) Int. Cl.: C07F 9/32

(54) **Process for the preparation of fosinopril and intermediates thereof**

(30) Priority: 25.05.2009 IT MI20090918
(71) Applicant: Dipharma Francis S.r.l., 20021 Baranzate (MI) (IT)
(72) Inventor: Razzetti, Gabriele, 20099 SESTO SAN GIOVANNI (MI) (IT); Riva, Sergio, 20030 SEVESO (MI) (IT); Allegrini, Pietro, 20097 S. DONATO MILANESE (MI) (IT); Michieletti, Mario, 28100 NOVARA (IT); Attolino, Emanuele, 74019 PALAGIANO (TA) (IT)
(74) Representative: Minoja, Fabrizio

(57) **Abstract**

Process for the preparation of intermediates useful in the synthesis of [1[S(R)],2α,4β]-4-cyclohexyl-1-[[[(2-methyl-1-oxypropoxy) propoxy](4-phenylbutyl) phosphinyl]acetyl]-L-proline, and the synthesis thereof, in particular as sodium salt.

## Description

### FIELD OF INVENTION

The present invention relates to a process for the preparation of intermediates useful in the synthesis of [1[S(R)],2α,4β]-4-cyclohexyl-1-[[[(2-methyl-1-oxypropoxy) propoxy](4-phenylbutyl) phosphinyl]acetyl]-L-proline, and the synthesis thereof, in particular as sodium salt.

### PRIOR ART

Fosinopril sodium, namely [1[S(R)],2α,4β]-4-cyclohexyl-1-[[[(2-methyl-1-oxypropoxy)propoxy](4-phenylbutyl) phosphinyl]acetyl]-L-proline, sodium salt (compound of formula (I), wherein M=Na), is a known compound with antihypertensive activity.

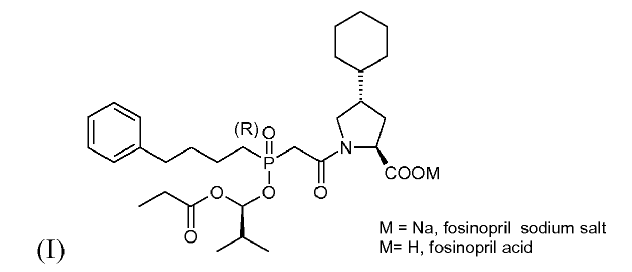

US 4,337,201 discloses the synthesis thereof by condensation between the optically active [[(2-methyl-1-oxypropoxy)propoxy](4-phenylbutyl) phosphinyl] acetic acid of formula (II) and trans 4-cyclohexyl-L-proline of formula (III), using a condensing agent or by activating the acid of formula (II), as shown in Scheme 1

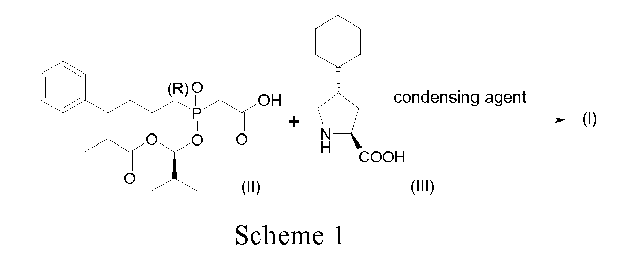

The synthesis of optically pure proline derivatives is relatively simple, as reported, for example, in US 4,912,231 and US 4,937,355. On the contrary, the synthesis of the optically active phosphine derivative of formula (II), as disclosed, for example, in US 4,873,356 and in US 5,008,399, is far more complex. It is prepared according to Scheme 2 below.

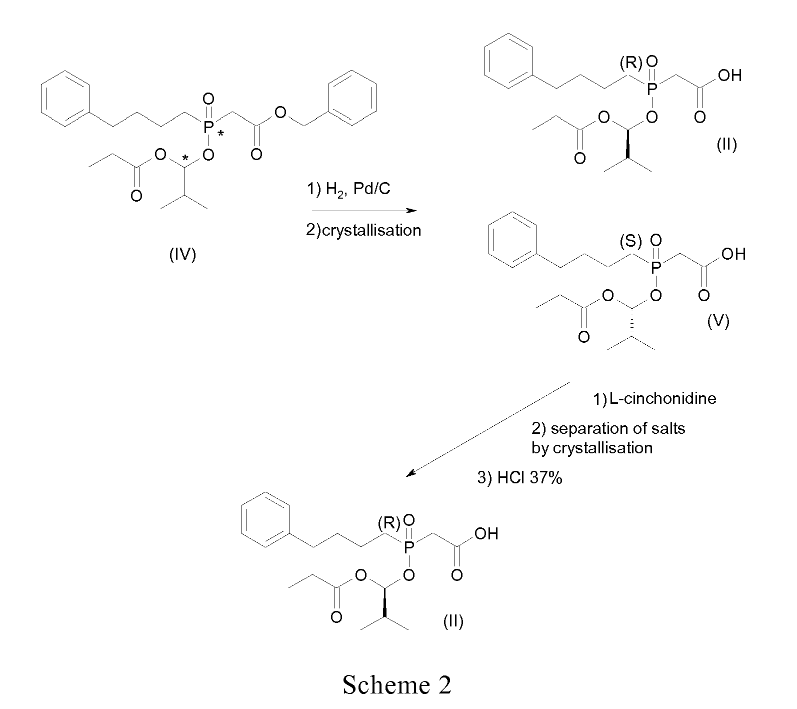

Briefly, the synthesis involves the preparation of the ester derivative of formula (IV), as a mixture of four diastereoisomers (the asterisk indicates the stereogenic centres), followed by removal of the protective benzyl group and subsequent crystallisation to isolate two of the four diastereoisomers as a racemic mixture of the compounds of formulae (II) and (V). The racemate is then resolved by formation of diastereomeric salts by reaction with the resolving agent L-cinchonidine. The salt of the acid of formula (II) with cinchonidine is then treated with a strong acid to obtain the isomer of formula (II), as free acid. It has to be noted that five consecutive crystallisations of the cinchonidine salt are carried out to obtain the intermediate of formula (II) with high enantiomeric purity, and thus suitable for the synthesis of fosinopril.

Although this method has been applied on an industrial scale, it is very expensive, laborious and inefficient, even if cinchonidine is recycled.

There is therefore the need for a synthetic route which provides the phosphine compound of formula (II), or a salt thereof, with high enantiomeric purity, without contaminants, and above all using more economical methods for its preparation on an industrial scale.

During the research designed to identify a more advantageous alternative method to the one reported above, which uses L-cinchonidine as resolving agent, it was found that completely enantioselective hydrolysis of the mixture of compounds (II) + (V), leading to isolation of compound (II) or compound (V) with high optical purity, can be obtained by enzymatic route. This was totally unexpected, because compounds (II) and (V) are synthetic derivatives, the structure of which is not found in nature, even in a slightly modified form. From analysis of the chemical structure it was therefore not foreseeable that these compounds were a possible substrate for the enzyme.

### SUMMARY OF THE INVENTION

A process has now been found which provides the phosphine compound of formula (II) or (V), or a salt thereof, as a single enantiomer by enantioselective enzymatic catalytic hydrolysis of the ester function of one of the single isomers of the racemic mixture of the compounds of formula (II) and (V). The process of the invention is advantageous on an industrial scale compared with known methods, and enables fosinopril or a salt thereof to be prepared more economically and efficiently.

### BRIEF DESCRIPTION OF ANALYSIS METHODS

The mixture of enantiomers of [[2-methyl-1-(1-oxypropoxy) propoxy](4-phenylbutyl)-phosphinyl] acetic acid of formula (II + V) was analysed by HPLC according to known methods, for example using a CHIRALCEL OD-H^{®} column (24x0.46 cm). The analysis was carried out by injecting a 10 µl sample of a solution obtained by dissolving 10 mg of mixture in 10 mL of isopropanol (iPrOH) containing 0.05% of trifluoroacetic acid (TFA), with a constant flow of 0.3 mL/min of petroleum ether (ETP)/iPrOH = 7/3. The retention time of the distomer of formula (V) was about 16 minutes, whereas the retention time of the eutomer of formula (II) was about 14 minutes. The iPrOH used for the eluent mixture also contains 0.05% of TFA.

The tests for checking the hydrolytic enzymatic activity were carried out by dissolving 5 mg of racemic mixture of compounds of formula (II + V) in 1 mL of 0.05 M phosphate buffer at pH 7.50 at about 50°C, and restoring the solution to room temperature. 5 to 50 mg of freeze-dried enzyme (depending on whether the enzyme was pure or crude) was added to the solution, which was left to stand overnight. The solution was tested by HPLC, according to the method described above, by taking a sample of about 20 µl of the reaction solution. Said sample was dried under nitrogen flow and taken up in 100 µL of iPrOH (added with 0.05% of TFA). About 10 µL of the solution thus obtained was analysed by HPLC.

### DETAILED DESCRIPTION OF THE INVENTION

The object of the invention is therefore a process for isolating a compound of formula (II), as a single enantiomer, or a salt thereof; 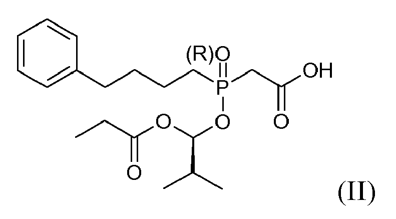 or a compound of formula (V), as a single enantiomer, or a salt thereof, 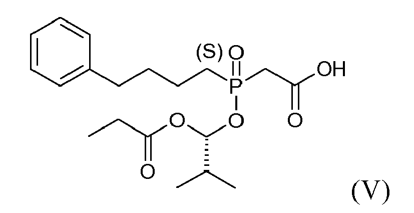 from a racemic mixture of compounds of formulae (II) and (V), or a salt thereof, comprising the enantioselective enzymatic hydrolysis of one of the single isomers of said mixture in the presence of an enzyme, in a solvent mixture.

The racemic mixture of compounds of formulae (II) and (V) can be prepared, for example, as disclosed in US 4,873,356.

An enzyme according to the invention is, for example, an enzyme belonging to the hydrolase class, and in particular to the sub-classes of lipases, proteases and esterases.

A hydrolase enzyme, in particular a lipase, protease or esterase according to the process of the invention, is preferably an enzyme active at a pH of between about 5 and 9.

Enantioselective enzymatic hydrolysis of the ester function in one of the enantiomer compounds of the racemic mixture of compounds of formulae (II) and (V) can preferably be carried out with a protease or esterase enzyme. Said enzymes can derive from various sources, such as bacteria, fungi, animals or plants.

In this way one of the two enantiomers which is not a substrate for the enzyme remains unchanged, while the other, which is the substrate for the enzyme, is hydrolysed to obtain a compound of formula (VI)

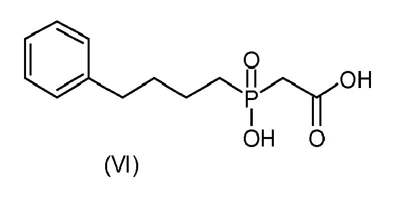

More preferably, the enantiomer of formula (V) can be isolated using an esterase, typically a recombinant esterase enzyme obtainable from a thermophilic organism, such as ESL-001-01^{®}, supplied by Recombinant Biocatalysis and present on the market as CloneZyme^{®}, or a recombinant esterase obtainable from *E. coli,* such as Esterase 004^{®} in Esterase kit LYO^{®}, supplied by Julich-Codexis.

The enantiomer of formula (II) can preferably be isolated using a protease, in particular a protease obtained from a bacterium of the genus *Bacillus,* preferably *Bacillus licheniformis,* such as one of the proteases named Proleather^{®}, supplied by Amano, or one of the Alkalases^{®} supplied by Clea or Novozyme.

A salt of a compound of formula (II) or (V) may be, for example, a pharmaceutically acceptable salt thereof, which can be obtained according to known methods.

A solvent mixture is, for example, formed by a solution comprising an aqueous buffer at a pH of between about 5.0 and 9.0, more preferably around a pH of about 7.5; and if the case an organic co-solvent, miscible or immiscible with the buffer.

According to a preferred aspect, said solvent mixture consists of an aqueous buffer at a pH of between about 5.0 and 9.0, more preferably around a pH of about 7.5.

A solution of an aqueous buffer may be, for example, selected from the group comprising a known phosphate buffer, ammonium bicarbonate, ethanolamine/HCl and borate; the reaction is preferably carried out in a phosphate buffer.

An organic co-solvent may be, for example, a solvent selected from the group comprising an aprotic polar solvent, such as dimethylformamide, dimethylacetamide, acetonitrile or dimethyl sulphoxide; a ketone, such as acetone or methyl isobutyl ketone; an ether, such as tetrahydrofuran or dioxane; an aprotic apolar solvent such as toluene, preferably an aprotic polar solvent.

The concentration of the racemate substrate, namely the racemic mixture of a compound of formula (II + V) in the solvent mixture, comprising a solution of a buffer and optionally an organic co-solvent, can be between about 5% and 50%, preferably between about 5% and 20%, and more preferably around about10%.

The reaction does not involve highly diluted operating conditions, as commonly occurs with enzymatic systems. This result, on an industrial scale, allows the reaction to be carried out in reactors of the size conventionally used for organic synthesis.

As can be noted, the reaction can be carried out at a temperature of between about 15 and 60°C, preferably between about 20 and 40°C, and more preferably at about 25°C.

The reaction times depend on the reaction temperature and the type of enzyme used. Typically, the enzyme is left to react until by HPLC about 50% conversion of the starting racemate is detected. If the reaction is carried out in the presence of an automatic titrator (pH-stat), the endpoint of the reaction can be set, for example, to pH 7.5, and the reaction mixture left under stirring until the titrator no longer corrects the pH of the mixture. According to the preferred operating conditions, indicated above, enzymatic hydrolysis is normally complete in about 1-2 days.

The pure enantiomer of formula (II) or (V) can be isolated from the reaction mixture by acidifying the end-of-reaction saline mixture to a pH of about 4 through the addition of hydrochloric acid, and extracting with a solvent such as toluene or ethyl acetate. By concentrating the organic solution, the enantiomer of formula (II) or formula (V) is obtained as a colourless oil, with excellent yields, typically between about 40 and about 50% starting from the racemate of formula (II + V), and chemical purity, evaluated by HPLC, equal to or higher than 95%, preferably equal to or higher than 98%.

The enantiomeric purity of the enantiomers of formulae (II) and (V) thus isolated, calculated by chiral HPLC, is expressed in terms of enantiomeric ratio, and is typically equal to or higher than 96:4, preferably equal to or higher than 99:1.

The enantiomer of formula (II) or (V) can be converted to its salt by reaction with an organic or inorganic base, preferably a tertiary amine, in a solvent, according to known methods.

The enantiomer of formula (II) thus obtained can be used directly to prepare fosinopril.

A further object of the invention is therefore a process for the preparation of [1[S(R)],2α,4β]-4-cyclohexyl-1-[[[(2-methyl-1-oxypropoxy) propoxy](4-phenylbutyl) phosphinyl]acetyl]-L-proline (fosinopril), or a pharmaceutically acceptable salt thereof, in particular the sodium salt, comprising the reaction of the so obtained enantiomer of formula (II) with trans 4-cyclohexyl-L-proline and, if desired, its conversion into a pharmaceutically acceptable salt thereof in particular by reaction with a base, according to known methods. The reaction can be carried out, for example, as reported in US 4,337,201.

A further object of the present invention is a process for isolating the isomer of formula (II), comprising selective enzymatic hydrolysis of the isomers of formulae (V) and (VII) in the mixture of the four diastereoisomers of formulae (II), (V), (VII) and (VIII) 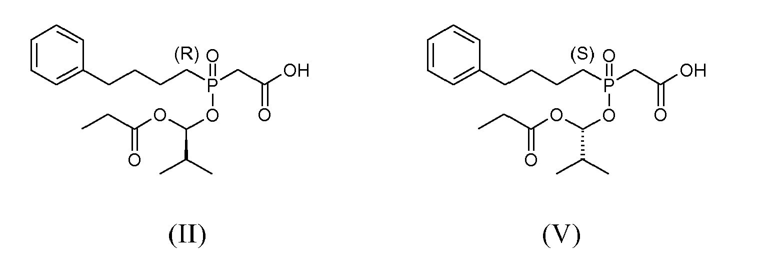 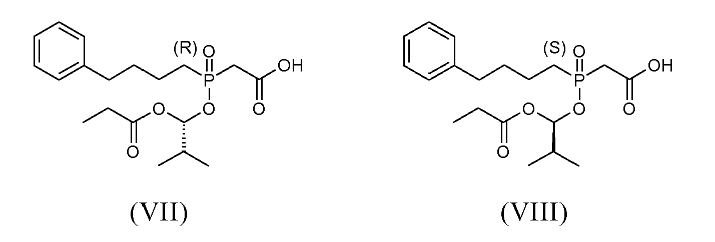 originating from debenzylation of the compound of formula (IV), as defined above, and subsequent separation of the isomer of formula (II) from its diastereoisomer (VIII) by known techniques, such as chromatographic techniques.

Selective hydrolysis of the mixture of the four diastereoisomers can be carried out using an enzyme according to the method reported above to obtain a compound of formula (II). The enzyme is preferably a protease, in particular a protease obtained from a bacterium of the genus *Bacillus,* preferably *Bacillus licheniformis.*

The so obtained enantiomer of formula (II) can be used directly to prepare fosinopril or a pharmaceutically acceptable salt thereof, for example as reported above.

The chemical purity of the so obtained compound of formula (II), evaluated by HPLC, is equal to or higher than 95%, preferably equal to or higher than 98%. Its enantiomeric purity calculated by chiral HPLC, expressed in terms of enantiomeric ratio, is typically equal to or higher than 96:4, preferably equal to or higher than 99:1.

The following examples illustrate the invention.

### Example 1: Synthesis of the compound of formula (V)

The racemic mixture of the compounds of formula (II+V) (1.0 g, 2.6 mmol) is suspended in 10 mL of 0.05 M phosphate buffer at pH 7.5. A few drops of 2N NaOH are added to maintain the pH at values of about 7-8, thus promoting complete dissolution of the solid. The so obtained solution is stirred in a pH-stat, a pH value of 7.5 being set as endpoint. 200 µL of enzyme solution (prepared by dissolving about 1.0 mg of freeze-dried ESL-001-01 enzyme in 0.5 mL of 0.05 M phosphate buffer at pH 7.0) is added. The solution is stirred until the titrator no longer corrects the pH; in particular, the reaction is stopped after 2 days and the addition of 22.0 mL of 0.1 N NaOH. The solution is acidified with 1N HC1 to about pH 4 and extracted with ethyl acetate. The organic phase is dried on Na₂SO₄ and the solvent is evaporated, to give about 0.46 mg of the product of formula (II) as a colourless oil, having an HPLC purity exceeding 98%, and an enantiomeric purity equal to 99:1.
¹H NMR (300 MHz, CDCl₃), ppm: 10.48 (bs, 1H), 7.28-7.12 (m, 5H), 6.30 (dd, 1H, *J* 7.8 and 4.2 Hz), 3.10 (dd, 1H, *J*_{gem} 14.5 and *J* 31.8 Hz), 3.04 (dd, 1H, *J*_{gem} 14.5 and *J* 33.5 Hz), 2.64-2.59 (m, 2H), 2.43-2.30 (m, 2H), 2.00 (m, 3H), 1.70 (m, 4H), 1.13 (t, 3H, *J* 7.5 Hz), 0.94 (d, 3H, *J* 2.7 Hz), 0.92 (d, 3H, *J* 2.4 Hz).

### Example 2: Synthesis of the compound of formula (II)

0.250 g of racemic mixture of the compounds of formula (II + V) are suspended in 15 mL of 0.05 M phosphate buffer at pH 7.5. A few drops of 2N NaOH are added to maintain the pH at values of about 7-8, and the solid is completely dissolved. The so obtained solution is stirred in a pH-stat, a pH value of about 6.5 being set as endpoint. 500 mg of crude Proleather enzyme (Amano) is added. The solution is stirred until the titrator no longer corrects the pH; in particular, the reaction is stopped after 2 days and the addition of 8.8 mL of 0.05 N NaOH. The solution is acidified with 1N HCl to pH 4 and extracted with ethyl acetate. The organic phase is dried on Na₂SO₄ and the solvent is evaporated, to give about 90 mg of the compound of formula (II) as a colourless oil, having an HPLC purity exceeding 98%, and an enantiomeric purity equal to 99:1.

### Example 3: Synthesis of the compound of formula (V)

1.0 g of racemic mixture of the compounds of formula (II+V) is suspended in 10 mL of 0.05 M phosphate buffer at pH 7.5. A few drops of 2N NaOH are added to maintain the pH at values of about 7-8, thus causing complete dissolution of the solid. The so obtained solution is stirred in a pH-stat, a pH value of 7.5 being set as endpoint. 5 mg of esterase enzyme Kit Lyo 004 (Julich-Codexis), amounting to about 64 U, is added. The solution is stirred until the titrator no longer corrects the pH; in particular, the reaction is stopped after 2 days and the addition of 29.3 mL of 0.1 N NaOH. The solution is acidified with 1N HC1 to about pH 4 and extracted with ethyl acetate. The organic phase is dried on Na₂SO₄ and the solvent is evaporated to give 0.41 g of the compound of formula (V) as a colourless oil, having an HPLC purity exceeding 97.9%, and an enantiomeric purity equal to 99:1.

### Example 4: Synthesis of the compound of formula (II)

NaH₂PO₄ monohydrate (12 g, 87 mmol) is dissolved in 150 mL of water in a 500 mL reactor and the pH is corrected with a 50% NaOH solution to a value of between 7.6 and 7.9. The solution is diluted with a further 50 mL of water. The racemic mixture of the compounds of formula (II+V) (20 g, 52 mmol) is then dissolved in the phosphate buffer solution, and the pH is corrected again with 50% NaOH to a value of between 7.6 and 7.8. The mixture is kept under stirring at 25°C until a solution is obtained; and then an enzyme solution CLEA EF-201 (15 mL, amounting to about 4600 units), containing the enzyme Alcalase^{®} (a protease obtained from *Bacillus licheniformis*), is then added.

The solution is slowly stirred at a temperature of between 20 and 25°C for 48 hours, correcting the pH occasionally with 50% NaOH to maintain it within values of between 7.6 and 7.9. The reaction mixture is then acidified by adding 30% HCl until a pH of about 3.4 is reached, and compound (II) is extracted with toluene. The organic phase is dried on Na₂SO₄ and the solvent is evaporated, to give 9.5 g of (II) as a colourless oil which solidifies during time, and has an HPLC purity exceeding 98.5% and an enantiomeric purity greater than 99:1.

### Example 5: Synthesis of fosinopril acid, compound (I) M=H

The pure enantiomer of the compound of formula (II) (2.3 g, 6.0 mmol) is dissolved in dichloromethane (60 ml) and treated with anhydrous hydroxybenzotriazole (1.0 g, 6.6 mmol). The solution is cooled to -18°C and treated with dicyclohexylcarbodiimide (1.36 g, 6.6 mmol). The reaction mixture is kept under stirring for about 4h and slowly restored to room temperature. The solution is then cooled again to about -18°C and treated with trans-4-cyclohexyl-L-proline hydrochloride (1.54g, 6.6 mmol) and N,N-diisopropylethylamine (1.7 g, 13.2 mmol). The mixture is restored to room temperature and left under stirring for 1 day. The end-of-reaction mixture is concentrated at reduced pressure, diluted with ethyl ether and treated with water. After filtration the biphasic mixture is acidified with HCl at a pH of between about 1 and 2, and the phases are separated. The aqueous phase is re-extracted with ethyl acetate and the combined organic phases are washed with water and brine and dried on Na₂SO₄, and after filtration and evaporation of the solvents at reduced pressure, about 4 g of crude fosinopril acid is obtained.

## Claims

1. Process for isolating a compound of formula (II), as a single enantiomer, or a salt thereof; 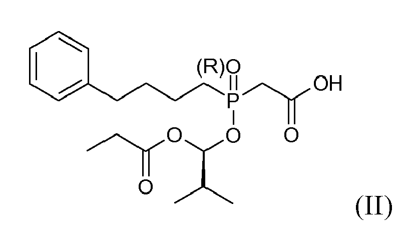 or a compound of formula (V), as a single enantiomer, or a salt thereof, 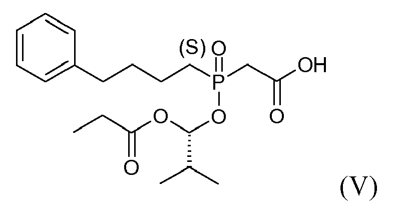 from a racemic mixture of compounds of formulae (II) and (V), or a salt thereof, comprising enantioselective enzymatic hydrolysis of one of the single isomers of said mixture in the presence of an enzyme, in a solvent mixture.

2. Process according to claim 1, wherein the enzyme is a hydrolase, preferably a lipase, protease or esterase, in particular a protease or esterase.

3. Process according to claim 1 or 2, wherein a compound of formula (II) is obtained in the presence of a protease, in particular a protease obtained from a bacterium of the genus *Bacillus,* preferably *Bacillus licheniformis.*

4. Process according to claim 1 or 3, wherein the solvent mixture comprises a solution of an aqueous buffer at a pH of between about 5.0 and 9.0; preferably a pH of about 7.5.

5. Process according to claim 4, wherein the solvent mixture consists of an aqueous buffer at a pH of between about 5.0 and 9.0, more preferably around a pH of about 7.5.

6. Process according to claim 4, wherein the solvent mixture further comprises an organic co-solvent.

7. Process according to claim 6, wherein the organic co-solvent is selected from the group comprising an aprotic polar solvent, a ketone and an ether; preferably it is an aprotic polar solvent.

8. Process according to claim 4 or 5, wherein the aqueous buffer is selected from the group comprising a phosphate buffer, ammonium bicarbonate, ethanolamine/HCl and a borate buffer; preferably a phosphate buffer, in particular the 0.05M phosphate buffer.

9. Process according to claim 1, 4 or 5, wherein the concentration of the racemic mixture of a compound of formula (II) and a compound of formula (V) in the solvent mixture is between about 5% and 50%, more preferably between about 5% and 20%.

10. Process according to claims 1 to 9, wherein the so obtained compound of formula (II) has an enantiomeric purity, calculated by chiral HPLC, equal to or higher than 96:4, preferably equal to or higher than 99:1.

11. Process according to claim 1, which further comprises reacting the so obtained enantiomer of formula (II) with trans 4-cyclohexyl-L-proline to obtain [1[S(R)],2a,4b]-4-cyclohexyl-1-[[[(2-methyl-1-oxypropoxy)propoxy] (4-phenylbutyl) phosphinyl]acetyl]-L-proline.

12. Process according to claim 10, further comprising the conversion of [1[S(R)],2a,4b]-4-cyclohexyl-1-[[[(2-methyl-1-oxypropoxy)propoxy] (4-phenylbutyl) phosphinyl]acetyl]-L-proline into a pharmaceutically acceptable salt thereof, in particular the sodium salt.

13. Process for isolating the single isomer of formula (II), comprising selective enzymatic hydrolysis of the isomers of formulae (V) and (VII) in the mixture of the four diastereoisomers of formulae (II), (V), (VII) and (VIII) 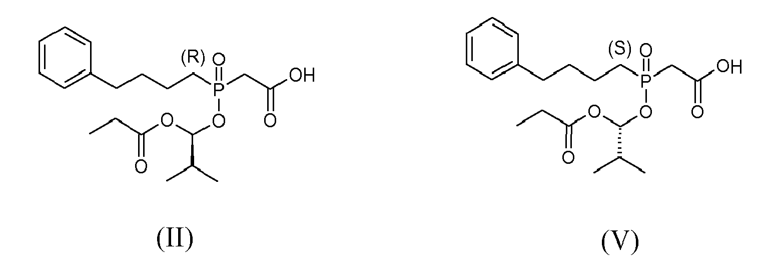 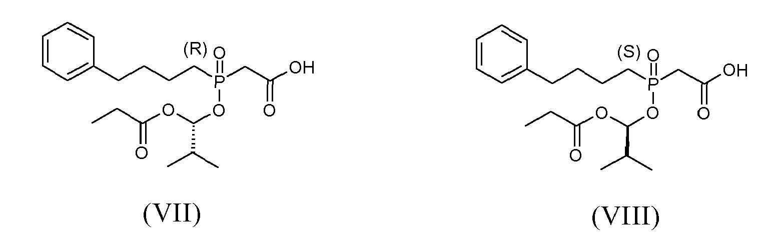 and subsequent separation of the isomer of formula (II) from its diastereoisomer of formula (VIII).

14. Process according to claim 13, wherein the enzymatic hydrolysis is carried out by a protease, in particular a protease obtained from a bacterium of the genus *Bacillus,* preferably *Bacillus licheniformis.*
